# EUROPEAN PATENT SPECIFICATION

(11) **EP 2 263 117 B1**
(45) Date of publication and mention of the grant of the patent: **17.08.2011**
(21) Application number: 09727471.6
(22) Date of filing: 26.03.2009
(51) Int. Cl.: G02F 1/1347, G09G 3/36

(54) **HIGH CONTRAST LIQUID CRYSTAL DISPLAY WITH ADJUSTABLE WHITE COLOR POINT**
FLÜSSIGKRISTALLANZEIGE MIT HOHEM KONTRAST UND VERSTELLBAREM WEISSPUNKT
DISPOSITIF D'AFFICHAGE À CRISTAUX LIQUIDES À CONTRASTE ÉLEVÉ AVEC POINT DE COULEUR BLANCHE RÉGLABLE

(30) Priority: 01.04.2008 EP 08103292
(43) Date of publication of application: 22.12.2010
(73) Proprietor: Koninklijke Philips Electronics N.V., 5621 BA Eindhoven (NL)
(72) Inventor: CHESTAKOV, Dmitri, NL-5656 AE Eindhoven (NL); ROSINK, Johannes, J., W., M., NL-5656 AE Eindhoven (NL)
(74) Representative: Van Velzen, Maaike Mathilde
(86) International application number: PCT/IB2009/051272
(87) International publication number: WO 2009/122329

(56) References cited:
- WO-A-2006/056956
- XU A ET AL: "Display methods for adjustable grayscale and luminance depth" PROGRESS IN BIOMEDICAL OPTICS AND IMAGING - PROCEEDINGS OF SPIE - MEDICAL IMAGING 2008: PACS AND IMAGING INFORMATICS 2008 SPIE US, vol. 6919, 13 March 2008 (2008-03-13), XP002532230
- MIYAMOTO T ET AL: "High resolution gray scale medical displays - Technical developments and actual products" NEC TECHNICAL JOURNAL JULY 2006 NEC MEDIAPRODUCTS JP, vol. 1, no. 3, July 2006 (2006-07), pages 70-74, XP002532231
- CARLO CASALE ET AL: "P-32: LED Backlight System for Medical Imaging on LCD Monitors" SID 2007, 2007 SID INTERNATIONAL SYMPOSIUM, SOCIETY FOR INFORMATION DISPLAY, LOS ANGELES, USA, vol. XXXVIII, 20 May 2007 (2007-05-20), pages 306-307, XP007013546 ISSN: 0007-966X

## Description

### FIELD OF THE INVENTION

The present invention relates to a display for displaying an image, particularly a display having a background light and a first and a second LCD panel stacked on top of each other. Furthermore, the present invention relates to a method for driving such display, a computer program product which is adapted to perform such method when executed on a computer and a computer-readable medium having such computer program product stored thereon.

### BACKGROUND OF THE INVENTION

Presently, LCD monitors are conquering the market: TV, desktops, laptops, touch screens, medical displays, avionic and automotive products. A liquid crystal display (LCD) generally comprises a plurality of picture elements (pixels) arranged in rows and columns. The operation of a liquid crystal display is based on light modulation in a liquid crystal cell including an active layer of a liquid crystal material. By applying an electric field over the liquid crystal layer, the polarization of the light passing through this layer may be modified. In LCD monitors, this effect is used to control the light emission from individual pixel elements. To this end, the liquid crystal layer is sandwiched in between two polarizers.

LCDs have clear advantages as compared with CRT-based technologies in terms of weight, size, energy consumption, etc. However, shortcomings of conventional LCD monitors are known as well such as low brightness, low dynamic contrast ratio, narrow viewing angle, backlight colour deviation, image motion blurring, etc. These shortcomings may prevent the use of LCD monitors in some professional applications where a maximum performance is required. Typical examples would be: control of flights, medical image diagnostics and image-guided surgery. In home TVs, the improvement of LCDs may also be desired, mainly in black level.

Although LCD displays are already being used in hospitals for many applications, it is recognized that especially for demanding applications like X-ray imaging, the current LCD image quality may be inferior to conventional X-ray films. In the medical imaging domain, it may be necessary that the image quality must satisfy the standard DICOM (Digital Imaging and Communication in Medicine). The realization of this standard in imaging modalities is strongly case-dependent: cardio-vascular imaging (CV) needs are different from X-ray chest diagnostics; X-ray chest diagnostics may be different from mammography, etc.

Conventional LCD monitors may suffer from the following problems or restrictions:
(1) Typical conventional colour LCD monitors may have a dynamic contrast ratio of 400:1, which is lower than that of 700:1 for conventional cathode ray tubes (CRT). The reason for that may be light leakage through the liquid crystal panel and ambient light reflected from the surface. In medical applications, a contrast of at least 800:1, in some cases 10.000:1, maybe desired.
(2) At large viewing angles, the contrast of conventional LCD monitors may be poor. Whereas the contrast ratio may be e.g. 400:1 at a viewing angle of 0°, i.e. perpendicular to the screen, the contrast ratio may drop below 100:1 1 at viewing angles of more than 70°. In medical applications, a plurality of physicians may have to look on a screen simultaneously, e.g. while doing image-guided surgery, so that it may be desired that at an angle of about 70°, the contrast ratio should be more than 1000:1.
(3) The so-called "white point" or "white colour point" of LCD monitors may deviate from one device to another, even within the same model line. Therein, the white point, which is often also referred to as "reference white" or "target white" in technical documents, may be defined as a set of tristimulus values or chromaticity coordinates that serve to define the colour "white" in image capture, encoding or reproduction. Nowadays, monitor suppliers can specify a colour tolerance of 10 JNDs (just noticeable difference) or worse, while human eye can distinguish a change of 1 JND of colour. Colour differences may become very annoying when LCD monitors are e.g. used in a side-by-side arrangement. In the medical domain, 4 to 6 monitors are often used side-by-side and physicians may have to analyze a whole set of images, which is displayed on the plurality of monitors, at once. In such applications, colour tuning of the images itself may be forbidden due to possible loss in dynamic range of the image information.

A conventional LCD for medical applications is disclosed in the paper "Display methods for adjustable grayscale and luminance depth" by A. Xu et al, published in PROGRESS IN BIOMEDICAL OPTICS AND IMAGING - PROCEEDINGS OF SPIE - MEDICAL IMAGING 2008: PACS AND IMAGING INFORMATICS 2008 SPIE US, vol. 6919, 13 March 2008. This paper forms the basis for the preamble of claim 1. Another conventional LCD with two LCD panels is disclosed in WO 2006/056956 A.

Conventional methods of adjusting the white point in an LCD are disclosed in the following papers: "High resolution gray scale medical displays - Technical developments and actual products" by Miyamoto et al, published in NEC TECHNICAL JOURNAL JULY 2006 NEC MEDIAPRODUCTS JP, vol. 1, no. 3, July 2006, pages 70-74; and "P-32: LED Backlight System for Medical Imaging on LCD Monitors" by Carlo Casale et al, published in SID 2007, 2007 SID INTERNATIONAL SYMPOSIUM, SOCIETY FOR INFORMATION DISPLAY, LOS ANGELES, USA, vol. XXXVIII, 20 May 2007, pages 306-307.

### SUMMARY OF THE INVENTION

There may be a need for a display for displaying an image, a method for driving such display, a computer program product adapted to perform such method when executed on a computer and a computer-readable medium having such computer program product stored thereon wherein at least some of the above described shortcomings of prior systems are at least partly overcome. Particularly, there may be a need for a display having a high contrast ratio of for example more than 1000:1 1 wherein this contrast ratio can be obtained under a wide range of viewing angles of for example up to 70° and wherein the white colour point of the display can be selectively adjusted. Furthermore, it may be advantageous to provide a display having improved properties at reasonable costs.

This need may be met by the subject-matter according to one of the independent claims. Advantageous embodiments of the present invention are described in the dependent claims.

According to a first aspect of the present invention, a display for displaying an image is provided wherein the display comprises a background light, a first LCD panel defining an array of pixel elements, a second LCD panel defining an array of pixel elements and a control unit for driving the first and second LCD panels. Therein, the second LCD panel is arranged between the first LCD panel and the background light and is a colour LCD panel. The control unit is adapted to control the second LCD panel such that the white color point of the display is adjusted.

A gist of the invention may be seen as being based on the following idea:

Two LCD panels are stacked on top of each other and in front of a background light such that light coming from the background light is first transmitted through the second LCD panel and then through the first LCD panel before being emitted from the display in the direction to an observer. The rear side, second LCD panel is a colour LCD panel while the front side, first LCD panel may be a black/white LCD panel.

Both LCD panels may have their own specific brightness range. For example, each of the LCD panels may have an 8 bit brightness scale (dynamic range). Accordingly, the image content on the display comprising both panels may be boosted to a dynamical range corresponding to the multiplication of the two specific dynamic ranges of the respective LCD panels: (dynamic range (panel 1)) x (dynamic range (panel 2)). Accordingly, a dynamic contrast ratio of e.g. about 70.000:1 may be achieved which is above the actual limit of 10.000:1 which can be perceived by a human eye.

At the same time, the viewing angle up to which images can be observed with an acceptable contrast ratio may become as wide as 170°. This may happen due to the smart design of the LCD panel stack. Optical polarization properties of a single liquid crystal panel are such that it dumps the light of wrong polarization and/or direction. When panels are combined or stacked together, this effect may be squared. Thereby, an increased viewing angle may be achieved.

Furthermore, as the second LCD panel is a colour LCD panel, the white point of the display or of an image to be displayed can be tuned simply by adjusting the colour content/colour setting at the second LCD panel. Accordingly, a multiplicity of displays which are for example arranged adjacent to each other may be adjusted to have the same white colour point such that a user can easily compare images displayed on the different displays without being distracted by different white colour points in the different images. Furthermore, as the second LCD panel includes an array with a plurality of pixel elements, the white colour point can even be adjusted locally within the two-dimensional area of the second LCD panel.

The control unit of the display is adapted to control the second LCD panel such that a white colour point of the display may be adjusted. For this purpose, the control unit may have an input port for inputting a desired value for the white colour point. For example, the desired white colour point can be input by indicating its coordinates XYZ in the CIE colour space or, alternatively, by indicating its tristimulus values in the LMS colour space. Having indicated such desired white colour point, the control unit can then determine specific settings to control the second LCD panel accordingly to obtain the desired white colour light after transmittance through the second LCD panel. For such purpose, the control unit may derive corresponding setting values for example from a previously generated lookup table. Alternatively, the control unit can derive the corresponding setting values using the feedback of sensors which are adapted and arranged to detect the colour and/or intensity of light transmitted through the second LCD panel.

In the following, further possible features, details and advantages of embodiments of the present invention are mentioned.

The background light can be any light source which is adapted and arranged in order to emit light which then can be transmitted through the first and second LCD panels. For example, the background light can be realized by using light-emitting diodes, LEDs. Light coming from such LEDs may be coupled into a light diffusing element which diffuses and redirects the light in order to homogeneously illuminate the first and second LCD panels from the rear side.

The first and second LCD panels each include an array of pixel elements wherein in each pixel element a liquid crystal layer being arranged between the two electrodes can be controlled such as to either transmit light coming from the background light or to at least partially block such light. The entire first and second LCD panels each may have a plurality of pixel elements arranged in rows and columns in a two-dimensional plane. Each of the LCD panels may be of the twisted nematic (TN) type or the supertwisted nematic (STN) type. The pixel elements of each of the LCD panels may have a uniform size throughout the entire array. Furthermore, pixel elements of the first LCD panel and pixel elements of the second LCD panel may have the same size or, preferably, may differ in size. The first LCD panel and the second LCD panel may be arranged parallel and, preferably, directly adjacent to each other and, preferably, also to the background light.

While the first LCD panel may be a black/white LCD panel wherein each pixel element is adapted to generate one of a range of greyscale values, e.g. 256 greyscale values, the second LCD panel is a colour LCD panel. Such colour LCD panel is adapted to generate one of a multiplicity of colours wherein, furthermore, the colour may be scaled concerning its brightness. For this purpose, each pixel element of the second, colour LCD panel may comprise a plurality of sub-pixels, e.g. three sub-pixels with respective red, green and blue colour filters, to create each colour pixel. Through careful control and variation of a voltage applied to the respective sub-pixel, the intensity of each sub-pixel can be set within a predetermined range, for example within 256 shades. Combining the sub-pixels produces a possibility palette of for example 16.8 million colours (256 shades of red x 256 shades of green x 256 shades of blue). Accordingly, light coming from the background light and having an original tone of white, i.e. an original white colour point, can be transmitted through the second LCD panel and, by suitably controlling the second LCD panel, the colour of this transmitted light can be suitably influenced.

According to an embodiment of the present invention, the display further includes sensor elements adapted to measure an intensity and/or a colour of light transmitted through the second LCD panel. For example, a plurality of sensor elements can be arranged on a side of the second LCD panel opposite to the side of the background light. Each sensor element may correspond to a specific partial area of the second LCD panel and measure the light transmitted through this partial area. Accordingly, the intensity and/or colour of the transmitted light can be determined for each of the partial areas of the second LCD panel. Alternatively, only a single sensor element may be used for measuring the intensity and/or colour of light transmitted through the second LCD panel, assuming a homogeneous intensity and/or colour distribution throughout the surface of the second LCD panel. The measurement values provided by the sensor element(s) can then be used to select or adapt the white colour point of the display.

Alternatively, the white colour point of the display may be calibrated using measurements acquired by one or more external sensor elements. Accordingly, the display may be pre-calibrated e.g. before actually using it for displaying images.

According to a further embodiment of the present invention, the control unit is adapted to control the second LCD panel such that a white colour point of the display is adjusted automatically based on data measured by sensor elements. In other words, the control unit can automatically determine setting values for the pixel elements of the second LCD panel based on the knowledge about the intensity and/or colour of light transmitted through the second LCD panel as it is included in the data measured by one or more sensor elements. Automatically adjusting the white colour point of a display may significantly simplify the work of a user when using a multiplicity of displays as each of the displays may be adjusted to the same white colour point such that images shown on the different displays can be easily compared.

According to a further embodiment of the present invention, the control unit is adapted to control the second LCD panel such that a white colour point of the display is adjusted locally with respect to positions within the two-dimensional array of pixel elements based on data measured by sensor elements at the respective positions. In other words, the white colour point is not adjusted uniformly over the entire surface of the display. Instead, it can be taken into account that the background light and/or the second LCD panel may be inhomogeneous concerning the light emitted therefrom or transmitted therethrough and that, accordingly, the light transmitted through the second LCD panel may have different white colour points at different positions within the area of the LCD panel. Accordingly, it may be advantageous to provide different setting values to the pixel elements of the second LCD panel at different positions.

According to a further embodiment of the present invention, the control unit is adapted to control the second LCD panel such that a selectable region of the display is highlighted by adjusting the colour of the background light transmitted through the second LCD display. For example, while the display is normally used in a black/white fashion thereby using the possibly higher resolution of the upper, first LCD panel, it may be advantageous to highlight a specific area of the display by giving this area a coloured background using the colour, second LCD panel. Even if the resolution of the second LCD panel is lower than the resolution of the first LCD panel, such highlighting may not reduce the overall resolution of the display being determined by the higher resolution of the first LCD display while at the same time drawing an observer's attention to the highlighted region.

According to a further embodiment of the present invention, the control unit is adapted to process image information of the image to be displayed such that a first portion of the image information is displayed on the first LCD panel and a second portion of the image information is displayed on the second LCD panel. Thus, the original image content may be distributed across the two LCD panels which, as a result, may yield a very high contrast, the contrast being the product of the contrast ratio of the individual panels, and, moreover, yield an increased bit depth of the grey scale values. For example, in medical applications, a bit depth of 10 or more bits may be advantageous as for example original X-ray data as measured with; for instance, mammography X-ray detectors, already contain 14 to 16 bit information. Accordingly, with the present embodiment, it would be possible to display nearly all of these different grey levels.

According to a further embodiment of the present invention, the control unit as described with respect to the previous embodiment is adapted to display the first portion of the image with a higher resolution than the second portion. In other words, details of the original image can be displayed on the first LCD panel with a high resolution, preferably a highest possible resolution corresponding to the resolution as defined by the size of the LCD pixel elements, whereas rougher structures of the original image may be displayed on the second LCD panel with a reduced resolution corresponding to a larger pixel size or to a resolution area which includes a plurality of pixel elements. Thereby, a high resolution of the entire display can be maintained while reducing the computational effort performed in the control unit and/or the costs for the control unit.

According to a further embodiment of the present invention, the second LCD panel has a lower resolution than the first LCD panel. In other words, the size of the pixel elements of the second LCD panel is larger than the size of the pixel elements of the first LCD panel. Similar advantages as with the previous embodiment may be obtained while furthermore reducing the costs of the display due to the low resolution second LCD panel.

Furthermore, it may be advantageous to adapt and arrange the first and second LCD panels in a way such that borders separating neighbouring pixel elements in the second LCD panel do overlap as few as possible with corresponding borders separating pixel elements within the first LCD panel. Thereby, parallax effects may be reduced.

According to a further embodiment of the present invention, the display further comprises a diffuser interposed between the first and second LCD panels. The diffuser may be adapted to diffuse the light coming from the background light and being transmitted through the second LCD panel before being further transmitted through the first LCD panel. The light diffusion may be due to scattering effects within the diffuser. For example, the diffuser may be a thin foil. Using such diffuser, an image displayed on the second LCD panel may be blurred relative to an image displayed on the first LCD panel. Blurring across a range of for example 5 pixels (1 - 2 mm) is thought to be adequate without destroying the high resolution demands of specific medical applications. Beneficially, the image displayed on the first LCD panel is sharpened relative to the image displayed on the second LCD panel. As a result, the "perceived" image displayed on the entire dual layer display corresponds to the original image. Blurring the image of the second LCD panel by a diffuser such as a diffusion foil may be significantly less complex than blurring directly the image displayed in the second LCD panel using e.g. known blurring algorithms. Accordingly, the costs for such display can be held reasonable while at the same time obtaining a high resolution, high contrast display having few parallax artefacts.

According to a further embodiment of the present invention, adjacent respective polarizers of the first and second LCD panels are aligned with respect to each other. This may involve aligning the front polarizer of the rear, second LCD panel and the back polarizer of the front, first LCD panel which are facing each other. Since the polarizer on each separate LCD panel are oriented vertically and horizontally, the back panel may have to be mirrored with respect to the front panel to achieve such arrangement in case the liquid crystal panels used for the first and second LCD panels are substantially similar. As is known to a person skilled in the art, the panels can also be oriented diagonally, the main point being that they are aligned.

According to a second aspect of the present invention, a method for driving a display as described above is presented, the method comprising: processing image information of an image to be displayed and controlling the display such that a first portion of the image information is displayed on the first LCD panel and a second portion of the image information is displayed on the second LCD panel; and adjusting a white colour point of the display by further processing the second portion of the image information.

Therein, the step of adjusting the white colour point may be performed, as outlined further above with respect to the embodiments of the inventive display, by predetermining a white colour point or by measuring an actual value of a white colour point value of light transmitted through the second LCD panel and feeding it back to the control unit. The control unit may then adjust the white colour point, globally or locally, by adjusting the settings to the pixel elements of the second LCD panel.

According to a third aspect of the present invention, a computer program product is presented which is adapted to perform the method according to the above-described second aspect when executed on a computer.

According to a fourth aspect of the present invention, a computer-readable medium is presented having a computer program product according to the third aspect of the invention stored thereon.

It has to be noted that aspects and embodiments of the invention have been described with reference to different subject-matters. In particular, some embodiments have been described with reference to the apparatus type claims whereas other embodiments are described with reference to method type claims. However, a person skilled in the art will gather from the above and the following description that, unless other notified, in addition to any combination of features belonging to one type of subject-matter also any combinations between features relating to different subject-matters, in particular between features of the apparatus type claims and features of the method type claims, is considered to be disclosed with this application.

The aspects and embodiments defined above and further aspects of the present invention may be apparent from exemplary embodiment to be described hereinafter with reference to the drawing but to which the invention is not limited.

### BRIEF DESCRIPTION OF THE DRAWING

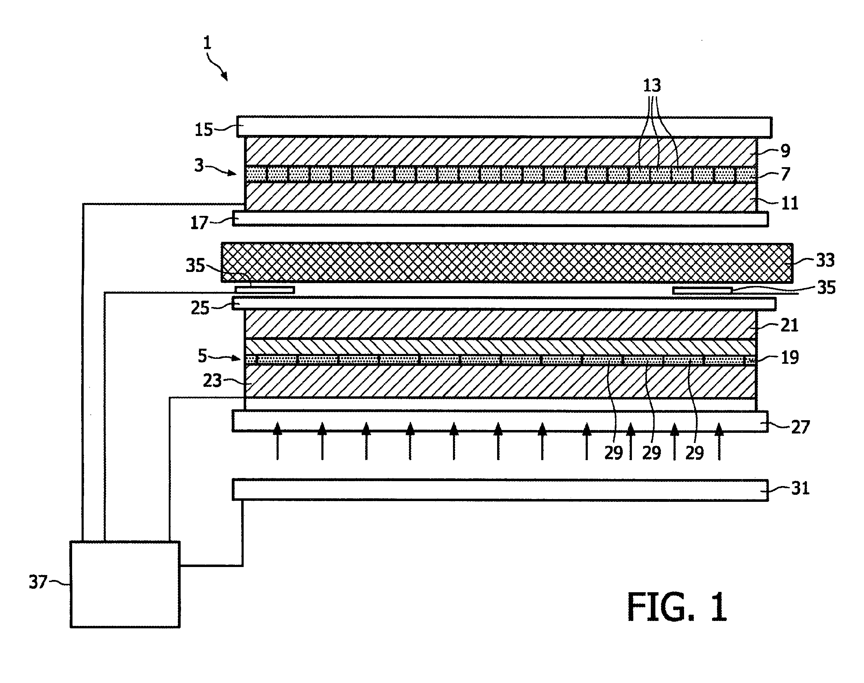

Fig. 1 shows the structure of a display according to an embodiment of the present invention.
   It is to be noted that the drawing is only schematic and not to scale.

### DETAILED DESCRIPTION OF THE EMBODIMENT

Fig. 1 shows a display 1 including a first LCD panel 3 and a second LCD panel 5. In the first LCD panel 3, a liquid crystal layer 7 is disposed between an upper and a lower glass plate 9, 11. The liquid crystal layer 7 comprises a multiplicity of pixel elements 13. Above the upper glass plate 9 and below the lower glass plate 11, optical polarizers 15, 17 are disposed. In a similar way, the second LCD panel 5 comprises a liquid crystal layer 19 disposed between glass plates 21, 23 which themselves are disposed between polarizers 25, 27. The liquid crystal layer 19 comprises pixel elements 29, the size of which is bigger than the size of the pixel elements 13 of the first LCD panel 3. While the first LCD panel 3 is a high resolution black/white LCD panel, the second LCD panel 5 is a low resolution colour LCD panel.

Below the second LCD panel 5, a background light 31 is arranged. The background light 31 uniformly illuminates the rear side of the second LCD panel 5 such that light coming from the background light 31 is first transmitted through the second LCD panel 5 and then through the first LCD panel 3 before being directed to an observer.

Furthermore, the display 1 comprises a diffuser 33 disposed between the first LCD panel 3 and the second LCD panel 5. The diffuser 33 serves for diffusing the light transmitted through the second LCD panel 5 before entering the first LCD panel 3. Thereby, the picture defined by the pixel elements 29 of the second LCD panel 5 is slightly blurred, thereby, on the one hand, preventing parallax effects between the first and second LCD panels 3, 5 and, on the other hand, serving for achieving a more uniform distribution of light emitted from the second LCD panel 5.

In the embodiment of fig. 1, the display 1 further comprises sensor elements 35 which are adapted to measure the intensity and/or the colour of light transmitted through the second LCD panel 5. Having such information from the sensor elements, a white colour point of the display 1 can be adjusted. However, it is to be noted that such sensor elements 35 are only an optional feature of the display 1. In order to calibrate the white colour point of the display, the intensity and/or the colour of light transmitted through the second LCD panel 5 or through the entire display 1 can also be determined e.g. in a previous calibration step using for example external sensor elements or detectors and inputting the measured intensity and/or colour data into a control unit 37 of the display.

The first LCD panel 3, the second LCD panel 5, the background light 31 and the sensor elements 35 are all connected to a control unit 37. This control unit is adapted for driving the first and second panels in a way that an image content to be displayed on the display 1 is divided into a first image to be created by the first LCD panel 3 and a second image to be created by the second LCD panel 5. The entire image to be displayed by the display 1 is then a superposition of the two images of the first and second LCD panels 3, 5. Therein, the image displayed by the first LCD panel 3 can show finer details as the pixel size of the pixel elements 13 of the first LCD panel 3 is finer than the pixel size of the pixel elements 29 of the second LCD panel 5.

While the fine details of an image to be displayed are created by the first LCD panel being a black/white LCD panel, the second display 5 is mainly used to adjust the white colour point of the entire display 1. Therein, the different red, green and blue pixels of the second LCD panel being a colour LCD panel can be addressed by the control unit 37 in such a way that the white colour of light coming from the background light 31 can be modified in order to adjust the white colour point of the entire display 1.

In an additional attempt to provide an intensified understanding of possible purposes, features and advantages of the present invention, aspects of the invention can be described as follows:

Medical imaging standards try to protect the consistency of image information presented at different monitors in order to assure the same or at least essentially same visual input for the medical specialist. This may be reflected in the specific dependence for the luminance versus grey scale of image pixels in case of black-and-white imaging, but also in the colour uniformity across the screen and between screens for coloured imaging case.

Herein, the mechanical design of a double layer LCD and possible advantages thereof are described. Particularly, it allows the ultimate contrast and viewing angle which are very much appreciated in medical imaging. The use of a double layer LCD requires also a specific image processing which distributes the image content between two LCD panels. In case of medical imaging , this must be done in a way which results in special luminance and colour response of the resulting superimposed image. It also requires a removal of the so-called "parallax effect", where two spatially separated images could produce an annoying visual doubling at their sharp edges. This can be effectively removed by blurring one of the images displayed on the LCD panels, preferably the image displayed on the rear side, second LCD panel.

However, in contrast to a black-and-white display which conventionally does not allow an adjustment of the white colour point of an image, the presented coloured double layer LCD could do so since at least one of its LCD panels has colour filters in its sub-pixels. The colour adjustment can be done for example by an image processing at pixel-to-pixel level, providing highest colour uniformity.

However, in this context it has to be mentioned that this may take quite a lot of computing power, possibly slowing down the system in the video mode. This might prevent the use of such system for instance in the image-guided surgery. In combination with blurring, colour consistency and prescribed luminance, it puts a limitation on the image in colour or luminance space or in both, this may be simply a result of the discrete mathematics applied to the colour and luminance space. It results in shrinkage of the colour in saturated colour areas and in the skip of grey levels near the white and the black where, usually, much of the medical information is hidden. This limitation may be not a common problem yet but the medical world is rapidly moving to the coloured imaging so that it might become a problem soon.

In order to avoid such first limitation, it is proposed to replace digital blurring of at least one of the images displayed on the first and/or second LCD panel by, instead, using optical diffusion obtained by a diffuser such as a scattering foil. This might greatly speed up the image processing, allowing the high resolution video mode. It can also recover colour and luminance space by replacing the digital blurring of the colour image with the optical diffusion and mixing the sub-pixel colours at the same time. This might improve the colour/luminance space as good such as to allow some colour adjustment around the white colour point without affecting the dynamic range of the imaging.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

## Claims

1. A display (1) for displaying an image, the display comprising:
a background light (31);
a first LCD panel (3) defining an array of pixel elements (13);
a second LCD panel (5) defining an array of pixel elements (29);
a control unit (37) for driving the first and second LCD panels (3, 5);
wherein the second LCD panel (5) is arranged between the first LCD panel (3) and the background light (31); **characterised in that**
the second LCD panel (5) is a color LCD panel; and
**in that** the control unit (37) is adapted to control the second LCD panel (5) such that the white color point of the display (1) is adjusted.

2. The display according to claim 1, wherein
the display (1) further includes sensor elements (35) adapted to measure at least one of an intensity and a color of light transmitted through the second LCD panel (5).

3. The display according to claim 2, wherein
the control unit (37) is adapted to control the second LCD panel (5) such that the white color point of the display (1) is adjusted automatically based on data measured by sensor elements (35).

4. The display according to one of claims 1 to 3, wherein
the control unit (37) is adapted to control the second LCD panel (5) such that the white color point of the display (1) is adjusted locally with respect to positions within the two-dimensional array of pixel elements based on data measured by sensor elements (35) at the respective positions.

5. The display according to one of claims 1 to 4, wherein
the control unit (37) is adapted to control the second LCD panel (5) such that a selectable region of the display (1) is highlighted by adjusting the color of the background light (31) transmitted through the second LCD display (5).

6. The display according to one of claims 1 to 5, wherein
the control unit (37) is adapted to process image information of the image to be displayed such that a first portion of the image information is displayed on the first LCD panel (3) and a second portion of the image information is displayed on the second LCD panel (5).

7. The display according to claim 6, wherein
the control unit (37) is adapted to display the first portion of the image with a higher resolution than the second portion.

8. The display according to one of claims 1 to 7, wherein
the second LCD panel (5) has a lower resolution than the first LCD panel (3).

9. The display according to one of claims 1 to 8, further comprising a diffuser (33) interposed between the first and second LCD panels (3, 5).

10. The display according to one of claims 1 to 9, wherein adjacent respective polarizers (15, 17, 25, 27) of the first and second LCD panels (3, 5) are aligned.

11. A method of driving a display according to one of claims 1 to 10, the method comprising:
processing image information of an image to be displayed and controlling the display (1) such that a first portion of the image information is displayed on the first LCD panel (3) and a second portion of the image information is displayed on the second LCD panel (5);
adjusting the white color point of the display by further processing the second portion of the image information.

12. A computer program product which is adapted to perform the method according to claim 11 when executed on a computer.

13. A computer readable medium having a computer program product according to claim 12 stored thereon.

## Patentansprüche

1. Anzeigevorrichtung (1) zum Anzeigen eines Bildes, wobei die Anzeigevorrichtung Folgendes umfasst:
ein Hintergrundlicht (31),
ein erstes Flüssigkristallfeld (3), das eine Bildpunktmatrix (13) definiert,
ein zweites Flüssigkristallfeld (5), das eine Bildpunktmatrix (29) definiert,
eine Steuereinheit (37) zum Ansteuern des ersten und des zweiten Flüssigkristallfeldes (3, 5),
wobei das zweite Flüssigkristallfeld (5)zwischen dem ersten Flüssigkristallfeld (3) und dem Hintergrundlicht (31) angeordnet ist; **dadurch gekennzeichnet, dass** das zweite Flüssigkristallfeld (5) ein Farbflüssigkristallfeld ist, und
dass die Steuereinheit (37) vorgesehen ist, um das zweite Flüssigkristallfeld (5) auf derartige Weise anzusteuern, dass der Weißpunkt der Anzeigevorrichtung (1) eingestellt wird.

2. Anzeigevorrichtung nach Anspruch 1, wobei
die Anzeigevorrichtung (1) weiterhin Sensorelemente (35) umfasst, die vorgesehen sind, um mindestens entweder eine Intensität oder eine Farbe des durch das zweite Flüssigkristallfeld (5) transmittierten Lichts zu messen.

3. Anzeigevorrichtung nach Anspruch 2, wobei
die Steuereinheit (37) vorgesehen ist, um das zweite Flüssigkristallfeld (5) auf derartige Weise anzusteuern, dass der Weißpunkt der Anzeigevorrichtung (1) automatisch basierend auf den durch die Sensorelemente (35) gemessenen Daten eingestellt wird.

4. Anzeigevorrichtung nach einem der Ansprüche 1 bis 3, wobei
die Steuereinheit (37) vorgesehen ist, um das zweite Flüssigkristallfeld (5) auf derartige Weise anzusteuern, dass der Weißpunkt der Anzeigevorrichtung (1) lokal in Bezug auf Positionen innerhalb der zweidimensionalen Bildpunktmatrix eingestellt wird, und zwar basierend auf den durch die Sensorelemente (35) an den jeweiligen Positionen gemessenen Daten.

5. Anzeigevorrichtung nach einem der Ansprüche 1 bis 4, wobei
die Steuereinheit (37) vorgesehen ist, um das zweite Flüssigkristallfeld (5) auf derartige Weise anzusteuern, dass eine auswählbare Region der Anzeigevorrichtung (1) durch Einstellen der Farbe des durch das zweite Flüssigkristallfeld (5) transmittierten Hintergrundlichts (31) hervorgehoben wird.

6. Anzeigevorrichtung nach einem der Ansprüche 1 bis 5, wobei
die Steuereinheit (37) vorgesehen ist, um Bildinformationen des anzuzeigenden Bildes zu verarbeiten, so dass ein erster Teil der Bildinformationen auf dem ersten Flüssigkristallfeld (3) angezeigt wird und ein zweiter Teil der Bildinformationen auf dem zweiten Flüssigkristallfeld (5) angezeigt wird.

7. Anzeigevorrichtung nach Anspruch 6, wobei
die Steuereinheit (37) vorgesehen ist, um den ersten Teil des Bildes mit einer höheren Auflösung anzuzeigen als den zweiten Teil.

8. Anzeigevorrichtung nach einem der Ansprüche 1 bis 7, wobei das zweite Flüssigkristallfeld (5) eine geringere Auflösung hat als das erste Flüssigkristallfeld (3).

9. Anzeigevorrichtung nach einem der Ansprüche 1 bis 8, die weiterhin einen zwischen dem ersten und dem zweiten Flüssigkristallfeld (3, 5) angeordneten Diffusor (33) umfasst.

10. Anzeigevorrichtung nach einem der Ansprüche 1 bis 9, wobei benachbarte jeweilige Polarisierer (15, 17, 25, 27) des ersten und des zweiten Flüssigkristallfelds (3, 5) aufeinander ausgerichtet sind.

11. Verfahren zum Ansteuern einer Anzeigevorrichtung nach einem der Ansprüche 1 bis 10, wobei das Verfahren Folgendes umfasst:
Verarbeiten von Bildinformationen eines anzuzeigenden Bildes und Ansteuern der Anzeigevorrichtung (1) auf derartige Weise, dass ein erster Teil der Bildinformationen auf dem ersten Flüssigkristallfeld (3) angezeigt wird und ein zweiter Teil der Bildinformationen auf dem zweiten Flüssigkristallfeld (5) angezeigt wird;
Einstellen des Weißpunktes der Anzeigevorrichtung durch weiteres Verarbeiten des zweiten Teils der Bildinformationen.

12. Computerprogrammprodukt, das vorgesehen ist, um das Verfahren nach Anspruch 11 durchzuführen, wenn es auf einem Computer ausgeführt wird.

13. Computerlesbares Medium mit einem darauf gespeicherten Computerprogrammprodukt nach Anspruch 12.

## Revendications

1. Dispositif d'affichage (1) pour afficher une image, le dispositif comprenant :
une lumière d'arrière-plan (31) ;
un premier panneau LCD (3) définissant une matrice d'éléments de pixels (13) ;
un second panneau LCD (5) définissant une matrice d'éléments de pixels (29) ;
une unité de contrôle (37) pour commander les premier et second panneaux LCD (3, 5) ;
dans lequel le second panneau LCD (5) est disposé entre le premier panneau LCD (3) et la lumière d'arrière-plan (31) ; **caractérisé en ce que**
le second panneau LCD (5) est un panneau LCD couleur ; et
**en ce que** l'unité de contrôle (37) est adaptée pour contrôler le second panneau LCD (5) de sorte que le point de couleur blanche du dispositif d'affichage (1) est ajusté.

2. Dispositif d'affichage selon la revendication 1, dans lequel le dispositif d'affichage (1) inclut en outre des éléments de capteurs (35) adaptés pour mesurer au moins un paramètre parmi une intensité et une couleur de lumière transmise à travers le second panneau LCD (5).

3. Dispositif d'affichage selon la revendication 2, dans lequel l'unité de contrôle (37) est adaptée pour contrôler le second panneau LCD (5) de sorte que le point de couleur blanche du dispositif d'affichage (1) est ajusté automatiquement basé sur les données mesurées par les éléments de capteurs (35).

4. Dispositif d'affichage selon l'une des revendications 1 à 3, dans lequel l'unité de contrôle (37) est adaptée pour contrôler le second panneau LCD (5) de sorte que le point de couleur blanche du dispositif d'affichage (1) est ajusté localement au regard des positions dans la matrice à 2 dimensions des éléments de pixels basé sur les données mesurées par les éléments de capteurs (35) aux positions respectives.

5. Dispositif d'affichage selon l'une des revendications 1 à 4, dans lequel l'unité de contrôle (37) est adaptée pour contrôler le second panneau LCD (5) de sorte qu'une région sélectionnable du dispositif d'affichage (1) est mise en évidence en ajustant la couleur de la lumière d'arrière-plan (31) transmise à travers le second dispositif d'affichage LCD (5).

6. Dispositif d'affichage selon l'une des revendications 1 à 5, dans lequel l'unité de contrôle (37) est adaptée pour traiter des informations d'image de l'image à afficher de sorte qu'une première partie des informations d'image est affichée sur le premier panneau LCD (3) et une seconde partie des informations d'image est affichée sur le second panneau LCD (5).

7. Dispositif d'affichage selon la revendication 6, dans lequel l'unité de contrôle (37) est adaptée pour afficher la première partie de l'image avec une résolution supérieur à la seconde partie.

8. Dispositif d'affichage selon l'une des revendications 1 à 7, dans lequel le second panneau LCD (5) a une résolution inférieur au premier panneau LCD (3).

9. Dispositif d'affichage selon l'une des revendications 1 à 8, comprenant en outre un diffuseur (33) interposé entre les premier et second panneaux LCD (3, 5).

10. Dispositif d'affichage selon l'une des revendications 1 à 9, dans lequel des polariseurs respectifs adjacents (15, 17, 25, 27) des premier et second panneaux LCD (3, 5) sont alignés.

11. Procédé de commande d'un dispositif d'affichage selon l'une des revendications 1 à 10, le procédé comprenant :
le traitement d'informations d'image d'une image à afficher et le contrôle du dispositif d'affichage (1) de sorte qu'une première partie des informations d'image est affichée sur le premier panneau LCD (3) et une seconde partie des informations d'image est affichée sur le second panneau LCD (5).
l'ajustement du point de couleur blanche du dispositif d'affichage en traitant en outre la seconde partie des informations d'image.

12. Produit programme d'ordinateur qui est adapté pour réaliser le procédé selon la revendication 11 quand il est exécuté sur un ordinateur.

13. Support lisible par ordinateur ayant un produit programme d'ordinateur selon la revendication 12 stocké dessus.
